# FASCICULE DE BREVET EUROPEEN

(11) **EP 3 185 084 B1**
(45) Date de publication et mention de la délivrance du brevet: **27.05.2020**
(21) Numéro de dépôt: 16164991.8
(22) Date de dépôt: 13.04.2016
(51) Int. Cl.: G04C 3/14

(54) **MÉCANISME D'AFFICHAGE POUR MONTRE**
ANZEIGEMECHANISMUS FÜR ARMBANDUHR
DISPLAY MECHANISM FOR A WATCH

(30) Priorité: 21.12.2015 EP 15201458
(43) Date de publication de la demande: 28.06.2017
(60) Demande divisionnaire: 17160287.3
(73) Titulaire: ETA SA Manufacture Horlogère Suisse, 2540 Grenchen (CH)
(72) Inventeur: BALMER, Raphaël, 2824 Vicques (CH); LAGORGETTE, Pascal, 2502 Bienne (CH)
(74) Mandataire: Giraud, Eric

(56) Documents cités:
- EP-A1- 3 070 538
- WO-A1-2013/127686
- CH-B1- 703 009
- FR-A1- 2 518 775
- JP-A- 2013 040 942
- US-A1- 2002 141 292

## Description

### Domaine de l'invention

L'invention concerne un groupe de motorisation pour montre selon la revendication 1.

L'invention concerne principalement le domaine de l'affichage pour des montres, en particulier des montres à mouvement plat, ainsi que pour des montres à mouvements électro-mécaniques, ou électroniques.

### Arrière-plan de l'invention

Pour un fabricant horloger, il est intéressant de gérer le plus faible nombre possible de composants différents pour des raisons économiques. Ceci concerne en particulier les mécanismes d'affichage, qui incorporent généralement une grande diversité de composants.

Ces composants d'affichage sont généralement guidés au niveau de deux éléments de structure: une platine, et un pont qui assure une reprise du pivotement des mobiles. Par exemple, dans le cas d'une roue seconde centre, actuellement il y a toujours un pont central qui reprend le pivotement de la roue seconde centre au-dessous du tube centre dans lequel pivote cette roue seconde centre.

Le document JP2013 040942 au nom de ETA SA Manufacture Horlogère Suisse décrit un sous-ensemble horloger comportant une entretoise pour guider un mobile pivotant sur une platine, avec une portée coopérant avec un logement de celle-ci, et une surface de butée en appui contre la platine. Il comporte un moyen d'entraînement fixé au mobile, qui coulisse par rapport à l'entretoise, avec un ébat axial, déterminé entre deux positions de butée, l'une entre une collerette du mobile et une face de bout avant de l'entretoise, et l'autre entre une surface de butée du moyen d'entraînement et une face de bout arrière de l'entretoise. Ce mobile comporte, de l'autre côté de la collerette par rapport audit moyen d'entraînement, un usinage coopérant avec un usinage complémentaire que comporte un élément d'affichage pour sa fixation solidairement au mobile.

Le document EP3070538A1 au nom de NOGERAH SA décrit un mécanisme d'affichage, pour mouvement horloger, comportant un premier mobile d'affichage portant un premier organe d'affichage rétrograde ainsi qu'un dispositif d'entraînement rétrograde comprenant un mobile de comptage entraîné par un mobile d'entraînement, un mobile de transmission coopérant, d'une part, avec le mobile de comptage et un organe élastique de rappel, de manière à se déplacer alternativement dans un premier sens de déplacement, au cours d'une première phase de fonctionnement, et dans un second sens de déplacement, opposé, au cours d'une seconde phase de fonctionnement, d'autre part, avec le premier mobile d'affichage, par l'intermédiaire d'un premier secteur denté. Le mobile de transmission comporte au moins un secteur denté supplémentaire présentant une liaison cinématique avec un mobile d'affichage supplémentaire destiné à porter un organe d'affichage rétrograde supplémentaire, de telle manière que les organes d'affichage soient synchronisés.

Le document US2002/141292A1 au nom de Marco BETTELINI, ETA SA Manufacture Horlogère Suisse, décrit la structure d'un mouvement d'horlogerie, plus particulièrement la structure de la roue des heures, dont l'intérieur du tube comporte un bourrelet annulaire coopérant avec une gorge annulaire disposée sur la paroi extérieure du tube de la chaussée. Ainsi, la roue des heures est encliquetée sur le mouvement, sans qu'il soit nécessaire de prévoir une pièce supplémentaire à cet effet, et sa roue dentée ne peut donc être libérée du pignon de minuterie lors du transport du mouvement.

Le document WO2013/127686 au nom de ETA SA Manufacture Horlogère Suisse décrit un mouvement d'horlogerie entraînant au moins un arbre de sortie pour la réception d'un indicateur d'affichage d'une grandeur physique ou temporelle en regard et au-dessus d'au moins un indicateur complémentaire ou d'un cadran. Cet indicateur complémentaire ou cadran est disposé au niveau d'une surface locale de référence ou d'appui que comporte localement le mouvement autour de chaque arbre de sortie du mouvement, ou étant disposé sur une telle surface locale de référence ou d'appui. Au moins un tel arbre de sortie comporte, du côté de sa surface locale de référence ou d'appui, une extrémité libre qui est, ou bien en retrait, ou bien juste à l'affleurement, par rapport à sa surface locale de référence ou d'appui.

Le document FR2518775A1 au nom de JUNGHANS GmbH décrit un mécanisme d'horloge comportant une plaquette de circuits imprimés pour montage électronique de commande du mouvement, et une plaque de support retenant la plaquette de circuits imprimés, pour un transducteur électromécanique devant entraîner un rouage de mise en mouvement d'une cadrature, introduites dans un bottier à deux coquilles. La cadrature est placée, du côté de la coquille antérieure, devant la plaque de support, tandis que le rouage est fixé, du côté de la coquille postérieure, derrière la plaque de support sur celle-ci, jusqu'à la petite moyenne traversant la plaque de support avec son pignon et pénétrant dans la cadrature. Cette plaquette de semi-conducteurs est fixée à la plaque de support de conformation sensiblement plane, à une faible distance de celle-ci, et lui est reliée par des broches qui sont soudées au placage de la plaquette de semi-conducteurs destiné aux bandes-conductrices et ancrées en tant que broches de connexion de bobinage dans un noyau d'enroulement du stator, qui est supporté par un empilement de stator du moteur pas à pas, positionné dans la zone de son ouverture de rotor, par concordance de forme derrière la plaque de support en reposant à plat sur elle. La plaquette de semi-conducteurs embrasse suivant un arc la zone occupée devant-la plaque de support par la grande moyenne (roue des minutes) et la roue des heures de la cadrature et porte, devant la paroi postérieure du boîtier, à côté et/ou au-dessous des roues du rouage, les composants du montage électronique de commande du mouvement.

Le document CH703009B1 au nom de TIMEX décrit un appareil électronique portatif destiné à véhiculer des informations utilisant un ou plusieurs indicateurs d'affichage, qui comprend un boîtier; une platine positionnée dans le boîtier; une pluralité de modules pouvant être insérés et retirés de manière indépendante, couplés à la platine, où chaque module comprend, d'une part un agencement d'engrenage comprenant au moins un engrenage rotatif et d'autre part un moteur pas à pas, le moteur pas à pas comprenant un rotor rotatif couplé audit au moins un engrenage rotatif, un régulateur couplé de manière fonctionnelle au moteur pas à pas de chaque module, afin de provoquer la rotation du rotor de chaque module, où un ou plusieurs indicateurs d'affichage est ou sont associé(s) et mécaniquement couplé(s) à chacun parmi la pluralité de modules, et où le positionnement du ou des indicateur(s) véhicule des informations par référence à un index particulier.

### Résumé de l'invention

L'invention se propose de réaliser un guidage des mobiles sans pont supérieur, et d'économiser ainsi une étampe de pont, des études d'outillages, des investissements, et des composants, et d'obtenir des mécanismes de moindre épaisseur que dans l'art antérieur.

A cet effet, l'invention concerne un groupe de motorisation pour montre, comportant une pluralité de modules moteurs, chacun comportant une platine agencée pour la fixation dudit module à un mouvement d'horlogerie, et comportant chacun des moyens moteurs agencés pour entraîner au moins un mobile d'affichage, selon la revendication 1.

L'invention concerne encore un mouvement d'horlogerie comportant au moins un tel groupe de motorisation.

L'invention concerne encore une montre comportant un tel groupe de motorisation.

### Description sommaire des dessins

D'autres caractéristiques et avantages de l'invention apparaîtront à la lecture de la description détaillée qui va suivre, en référence aux dessins annexés, où:

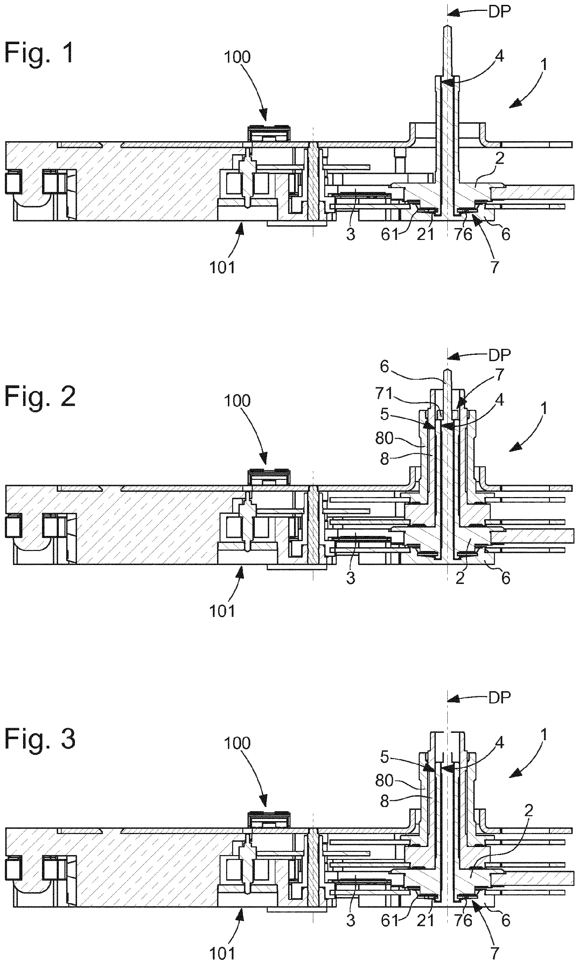

- la figure 1 représente, de façon schématisée et en coupe passant par l'axe de pivotement des mobiles, un module moteur d'horlogerie comportant un mécanisme d'affichage, avec un tube de centre fixé solidairement d'une platine, et servant de guidage à un mobile intérieur, de centre, comportant un arbre et une roue, notamment un mobile de seconde au centre, dans une variante de l'invention où ce tube de centre et ce mobile intérieur ont un débattement axial relatif qui est limité par un circlips logé dans une gorge extérieure du tube de centre, et une gorge intérieure du mobile intérieur, ménagée au niveau du flasque de la roue ;
- la figure 2 représente, de façon similaire à la figure 1, un module similaire, comportant encore une chaussée des minutes et une chaussée des heures, et où l'arrêt axial du mobile intérieur est réalisé par une bague rapportée chassée sur son arbre ;

- la figure 3 représente, de façon similaire à la figure 2, un module avec la même configuration, et où l'arrêt axial du mobile intérieur est réalisé par un circlips comme sur l'exemple de la figure 1 ;
- la figure 4 est un schéma purement didactique destiné à la visualisation des surfaces en présence dans les différentes variantes, également en coupe passant par l'axe de pivotement des mobiles, montrant un mobile intérieur comportant à la fois les deux variantes d'arrêt, par bague rapportée à son extrémité supérieure, par circlips au niveau du flasque de sa roue, et un mobile extérieur pivotant sur le tube de centre et arrêté axialement par un circlips ;
- la figure 5 est un schéma analogue à la figure 4 illustrant une variante d'arrêt par cale rapportée d'un mobile extérieur monté pivotant sur le tube de centre ;
- la figure 6 est un schéma analogue à la figure 4 illustrant une variante d'arrêt d'un mobile intérieur, qui ne fait pas partie de l'invention, par une surface protubérante que comporte ce mobile intérieur ;
- la figure 7 est un schéma analogue à la figure 4 illustrant une variante d'arrêt d'un mobile extérieur, qui ne fait pas partie de l'invention, par une surface protubérante que comporte le tube de centre ;
- la figure 8 représente, de façon schématisée et en coupe passant par son axe de pivotement, un ensemble comportant une aiguille agencée pour constituer un arrêt rapporté sur l'arbre du mobile intérieur pour son arrêt axial, et le module porteur de ce mobile intérieur, avant fixation de l'aiguille ;
- la figure 9 représente, de façon similaire à la figure 8, le même ensemble après clipage de l'aiguille sur l'arbre du mobile intérieur ;
- la figure 10 représente, de façon schématisée et en vue de dessous selon la flèche A de la figure 8, la même aiguille avant sa fixation ;
- les figures 11 à 16 représentent, de façon schématisée et en perspective, un groupe de motorisation selon l'invention, comportant trois modules moteurs, comportant chacun des moyens moteurs agencés pour entraîner au moins un mobile d'affichage, dont l'un de ces modules comporte un mécanisme d'affichage, selon une séquence de montage où ce groupe, constitué par les trois modules, pré-assemblés au niveau de leurs platines, reçoit un tube de centre en figure 11, un circlips présenté au niveau d'une gorge extérieure de ce tube de centre en figure 12

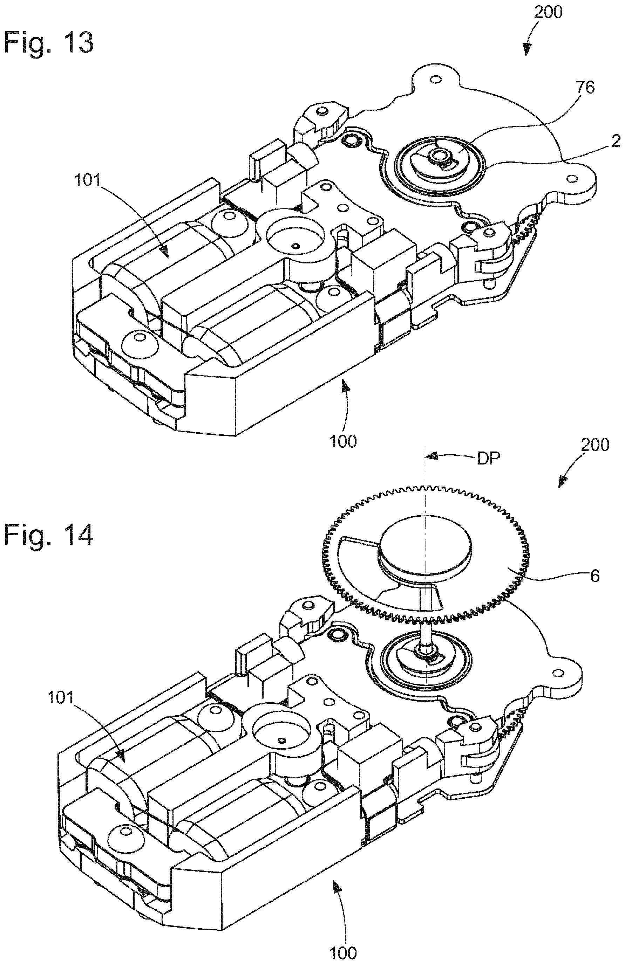

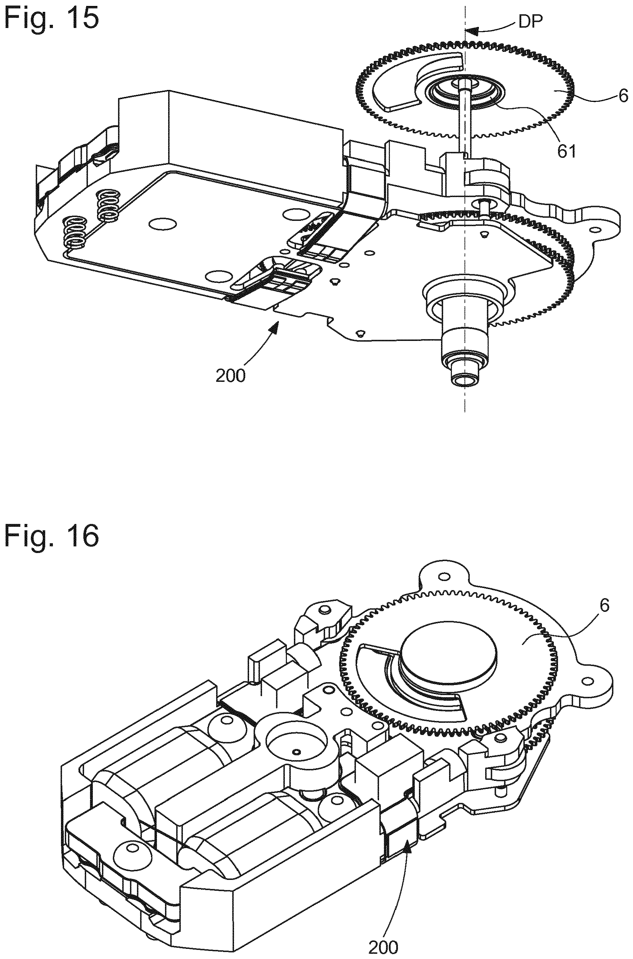

et clipé en figure 13, l'insertion d'un mobile intérieur dans le tube de centre en figures 14 et 15, où est visible sa gorge intérieure pour la réception du circlips, et le clipage du mobile intérieur sur le circlips en figure 16 ;

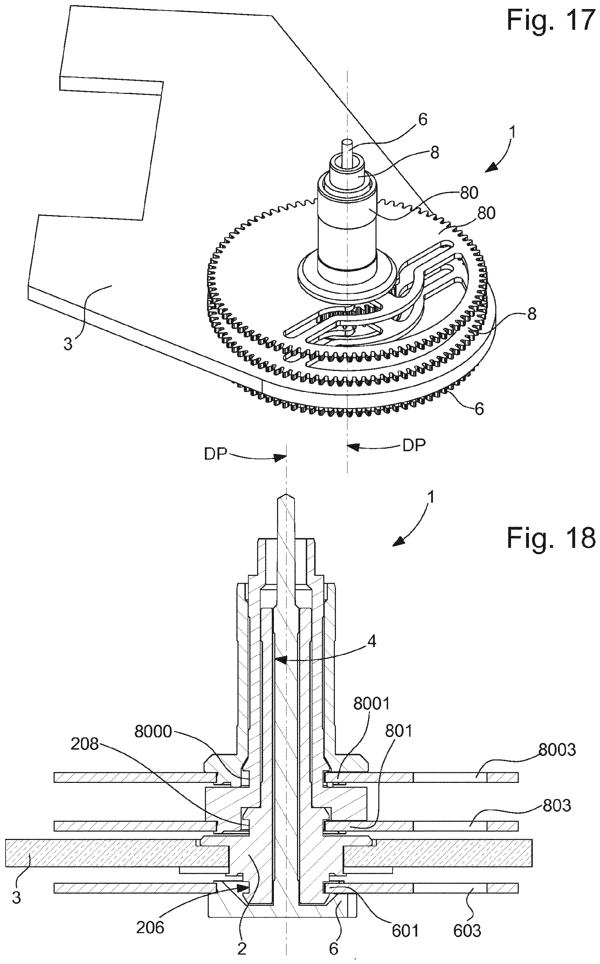

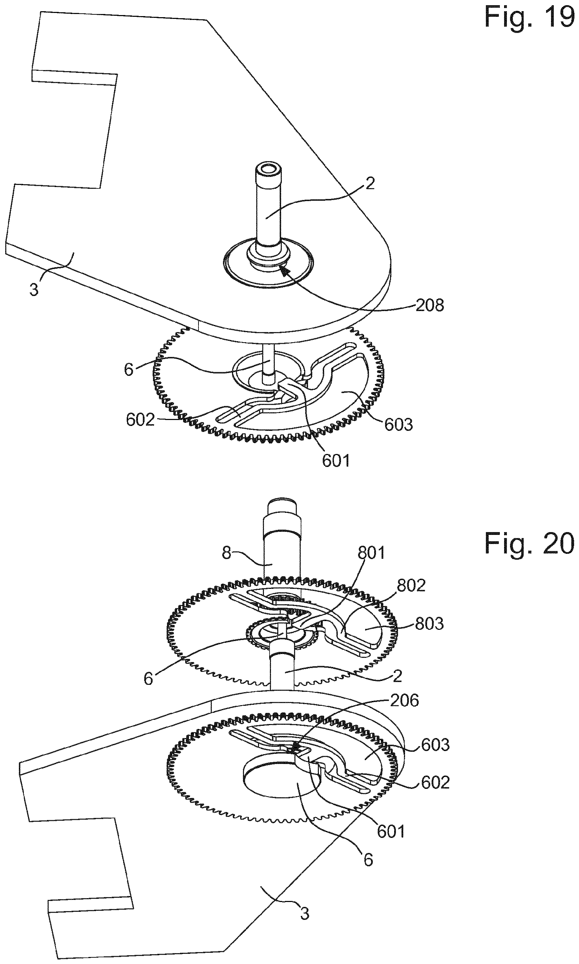

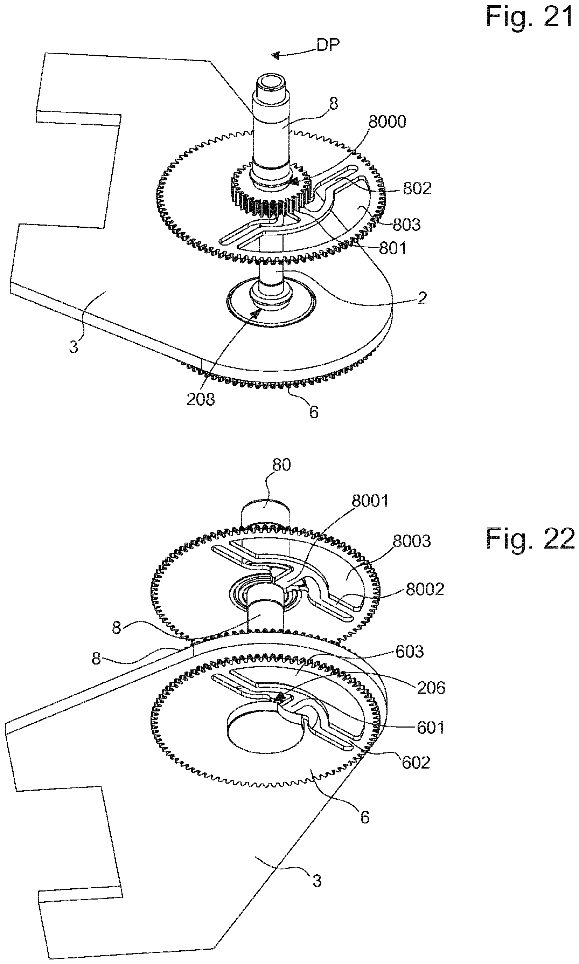

- les figures 17 à 23 illustrent une autre variante, avec le montage de trois rouages concentriques avec la planche qui fait office de circlips, permettant ainsi de supprimer le pont côté fond et le pont côté cadran ;

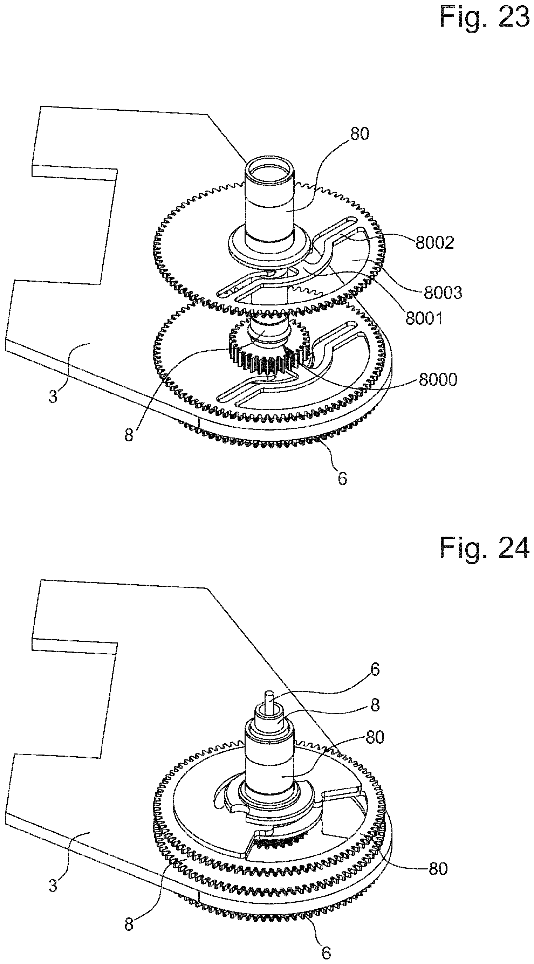

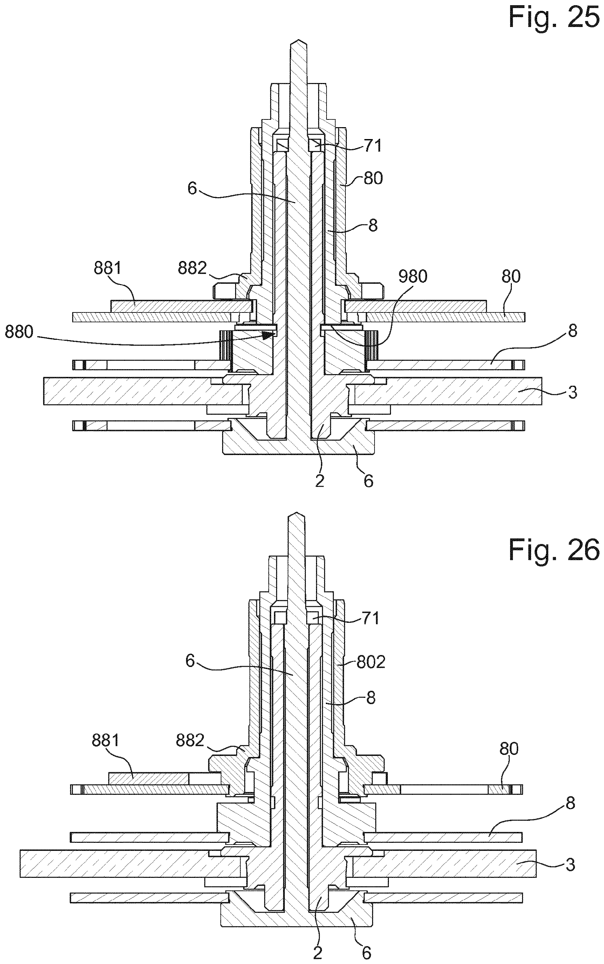

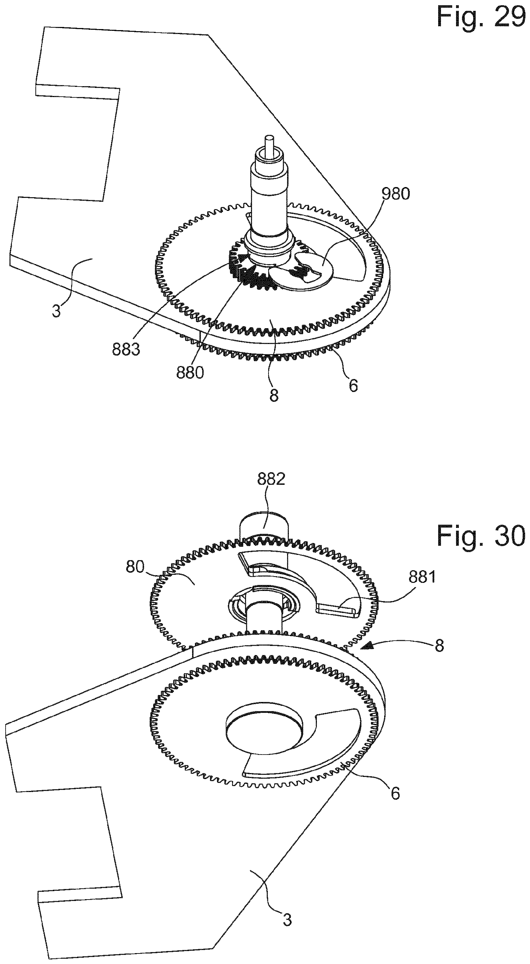

- les figures 24 à 27, 28A, 28B, 28C, et 29 à 31, illustrent une autre variante encore, avec l'arbre du mobile intérieur arrêté sur l'extrémité du tube de centre par une butée axiale chassée ;

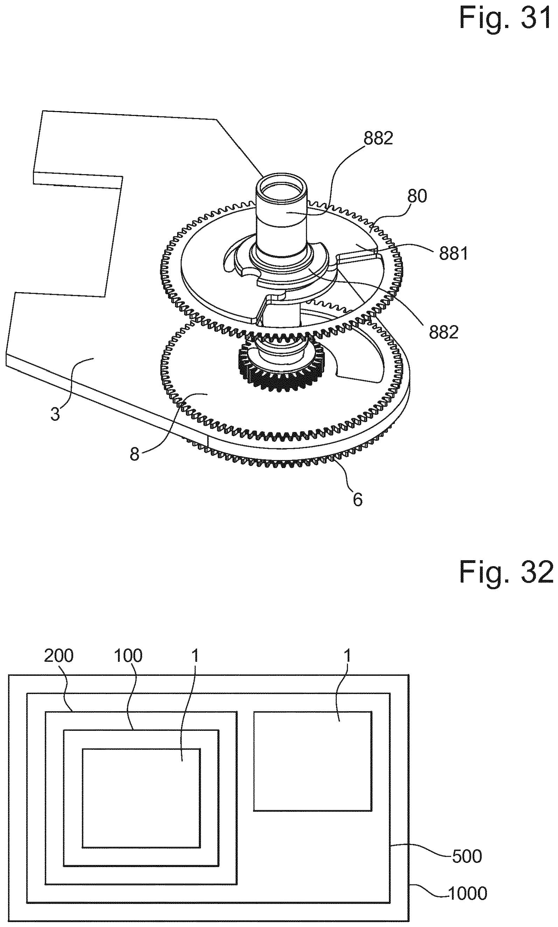

- la figure 32 est un schéma-blocs représentant une montre comportant un mouvement avec un tel groupe de motorisation, un tel module, et un tel mécanisme d'affichage.

### Description détaillée des modes de réalisation préférés

L'invention concerne un groupe de motorisation 200 comportant une pluralité de modules moteurs 100, chacun comportant une platine 3 agencée pour la fixation du module 100 à un mouvement d'horlogerie 500.

Chacun des modules moteurs 100 comporte des moyens moteurs 101 agencés pour entraîner au moins un mobile d'affichage 6, 8. Et au moins l'un de ces modules moteurs 100 comporte un mécanisme d'affichage 1 décrit ci-après.

Un tel groupe de motorisation 200 peut également comporter, en plus de modules moteurs 100, d'autres modules transmetteurs, dépourvus de fonction de motorisation, et dévolus à des renvois, des affichages secondaires, des démultiplications, des inversions de sens de rotation, ou autre.

Ce mécanisme d'affichage 1 d'horlogerie comporte un tube de centre 2, qui est fixé sur une platine 3, par chassage, collage, clipage, surmoulage, rivetage, rivetage sur rondelle, ou autre. Ce tube de centre 2 comporte au moins un alésage principal 4, ou/et une portée principale 5 de guidage, pour la réception et le guidage en rotation, autour d'un axe principal DP, d'un mobile d'affichage 6, 8, intérieur ou extérieur à ce tube de centre 2.

Ce module 100 comportant le mécanisme d'affichage 1 comporte au moins une butée axiale 7, qui est agencée pour limiter à une valeur prédéterminée le jeu axial selon la direction de l'axe principal DP entre le tube de centre 2 et le mobile d'affichage 6 ou 8. Et cette au moins une butée axiale 7 est, ou bien une surface protubérante 28, 69, du tube de centre 2 ou du mobile d'affichage 6, 8, ou bien une butée axiale rapportée 71, 79, 76, 98 qui est, ou bien montée prisonnière entre le tube de centre 2 et le mobile d'affichage 6, 8, ou bien fixée au mobile d'affichage 6, 8.

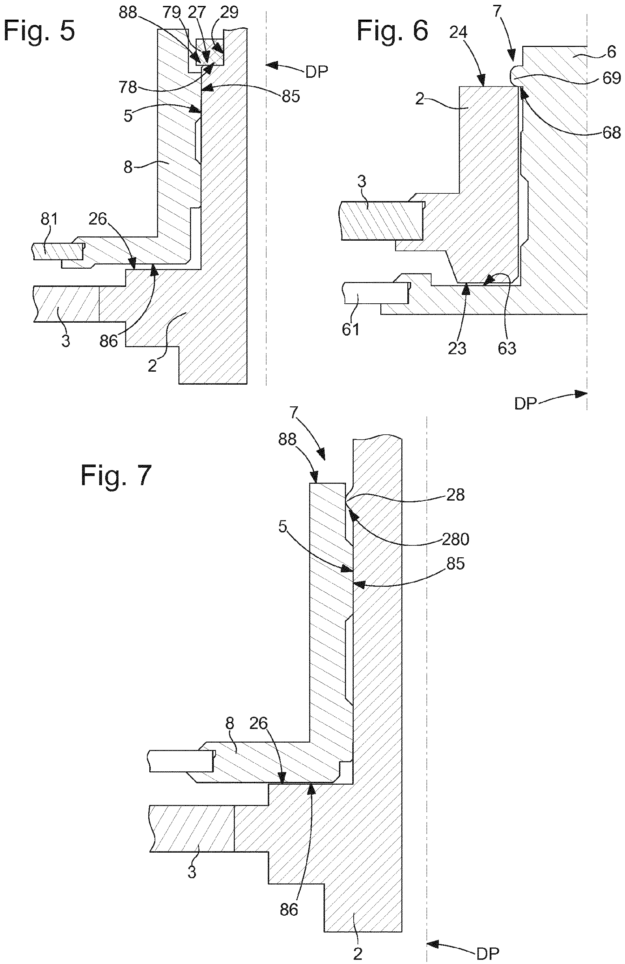

Les figures 2 et 5 illustrent un premier mode de réalisation où la butée axiale comporte une bague rapportée, fixée sur le tube de centre 2 ou sur un mobile que guide ce tube de centre 2.

La figure 2 illustre une variante où le mobile d'affichage est un mobile intérieur 6, guidé dans l'alésage principal 4 du tube de centre 2. La butée axiale 7 est ici une butée axiale rapportée comportant une première bague 71 chassée sur une première portée 66 du mobile intérieur 6, en appui sur un premier épaulement 67 que comporte ce mobile intérieur 6, à une extrémité de la première portée 66. Cette première bague 71 comporte, tournée vers la platine 3, une première face de butée 74 qui est agencée pour constituer une butée par rapport à une première face supérieure 24 que comporte le tube de centre 2. Le mobile intérieur 6 comporte, du côté opposé à la première portée 66 par rapport à la platine 3, une première face de bout 63 qui est opposée à une première face inférieure 23 que comporte le tube de centre 2. De façon particulière, la première face supérieure 24 ou/et la première face inférieure 23 est perpendiculaire à l'axe principal DP. De façon particulière, le premier épaulement 67 ou/et la première face de bout 63 est perpendiculaire à l'axe principal DP. De façon particulière, première face de butée 74 est perpendiculaire à l'axe principal DP.

Le débattement relatif du mobile intérieur 6 par rapport au tube de centre 2 est ainsi limité au niveau supérieur par une coopération en appui de butée entre la première face de butée 74 et la première face supérieure 24, et, au niveau inférieur opposé au niveau supérieur, par une coopération en appui de butée entre la première face de bout 63 et la première face inférieure 23.

La figure 5 illustre une variante, similaire à celle de la figure 2, mais où le mobile d'affichage est un mobile extérieur 8, guidé sur une portée principale 5 du tube de centre 2. La butée axiale 7 est une butée axiale rapportée comportant une deuxième bague 79 chassée sur une deuxième portée 29 du tube de centre 2, en appui sur un deuxième épaulement 27 que comporte ce tube de centre 2, à une extrémité de la deuxième portée 29. Cette deuxième bague 79 comporte, tournée vers la platine 3, une deuxième face de butée 78 qui est agencée pour constituer une butée par rapport à une deuxième face supérieure 88 que comporte le mobile extérieur 8. Le mobile extérieur 8, comporte, du côté opposé à la deuxième face supérieure 88 et au plus près de la platine 3, une deuxième face de bout 86, qui est opposée à une face intermédiaire 26 que comporte le tube de centre 2. Le débattement relatif du mobile extérieur 8 par rapport au tube de centre 2 est limité au niveau supérieur par une coopération en appui de butée entre la deuxième face de butée 78 et la deuxième face supérieure 88, et, à un niveau intermédiaire situé entre la platine 3 et le niveau supérieur, par une coopération en appui de butée entre la deuxième face de bout 86 et la face intermédiaire 26.

Plus particulièrement, le mobile intérieur 6 est une roue de seconde au centre, dont la tenue axiale en Z est ainsi assurée par une bague chassée sur l'arbre depuis le côté aiguille.

Dans une variante où on n'envisage pas de démontage, la bague rapportée peut être chassée, collée, soudée, rivetée, sertie, ou similaire.

Les figures 6 et 7 illustrent une variante ne faisant pas partie de l'invention et où la butée axiale comporte une surface protubérante au niveau du tube de centre 2 ou d'un mobile que guide ce tube de centre 2.

La figure 6 illustre une configuration où le mobile d'affichage est encore un mobile intérieur 6 guidé dans l'alésage principal 4 du tube de centre 2. La butée axiale 7 comporte cette fois une première surface protubérante 69, que comporte le mobile intérieur 6, et qui définit, tournée vers la platine 3, une première surface de butée 68, qui est agencée pour constituer une butée par rapport à la première face supérieure 24 du tube de centre 2.

Cette surface protubérante peut être réalisée par déformation de l'arbre du mobile intérieur 6, ou par apport de matière, ou encore par une déformation locale créée par un enlèvement de matière. De façon non limitative, il est possible de repousser localement la matière de l'arbre du mobile intérieur 6, pour former un bourrelet, ou de pré-usiner cet arbre avec une lèvre rabattable avec une bouterolle, ou encore d'usiner, après assemblage de l'arbre du mobile intérieur 6 déjà enfilé dans le tube de centre 2 et en appui inférieur, des cratères périphériques avec un faisceau laser juste au-dessus de la face de bout du tube de centre 2, ou de réaliser une simple saignée de révolution, dont l'une des lèvres forme l'arrêt, ou encore d'effectuer une projection plasma, ou le soudage d'un point ou d'une série de points ou d'un cordon, ou autre.

Comme pour la variante de la figure 2, le mobile intérieur 6 comporte, du côté opposé à la première portée 66 par rapport à la platine 3, une première face de bout 63 opposée à la première face inférieure 23 que comporte le tube de centre 2. Et le débattement relatif du mobile intérieur 6 par rapport au tube de centre 2 est limité au niveau supérieur par une coopération en appui de butée entre la première surface de butée 68 et la première face supérieure 24, et, au niveau inférieur opposé audit niveau supérieur, par une coopération en appui de butée entre la première face de bout 63 et la première face inférieure 23.

La figure 7 illustre une variante, similaire à celle de la figure 6, mais où le mobile d'affichage est encore un mobile extérieur 8, guidé sur une portée principale 5 du tube de centre 2. La butée axiale 7 est une deuxième surface protubérante 28, que comporte le tube de centre 2, et qui comporte, tournée vers la platine 3, une deuxième surface de butée 280 agencée pour constituer une butée par rapport à une deuxième face supérieure 88 que comporte le mobile extérieur 8. Cette deuxième surface protubérante 28 peut être réalisée de façon analogue à la première surface protubérante 69 de la figure 6. Le mobile extérieur 8, comporte, du côté opposé à la deuxième face supérieure 88 et au plus près de la platine 3, une deuxième face de bout 86 opposée à la face intermédiaire 26 du tube de centre 2. Le débattement relatif du mobile extérieur 8 par rapport au tube de centre 2 est limité au niveau supérieur par une coopération en appui de butée entre la deuxième surface de butée 280 et la deuxième face supérieure 88, et, à un niveau intermédiaire situé entre la platine 3 et le niveau supérieur, par une coopération en appui de butée entre la deuxième face de bout 86 et la face intermédiaire 26.

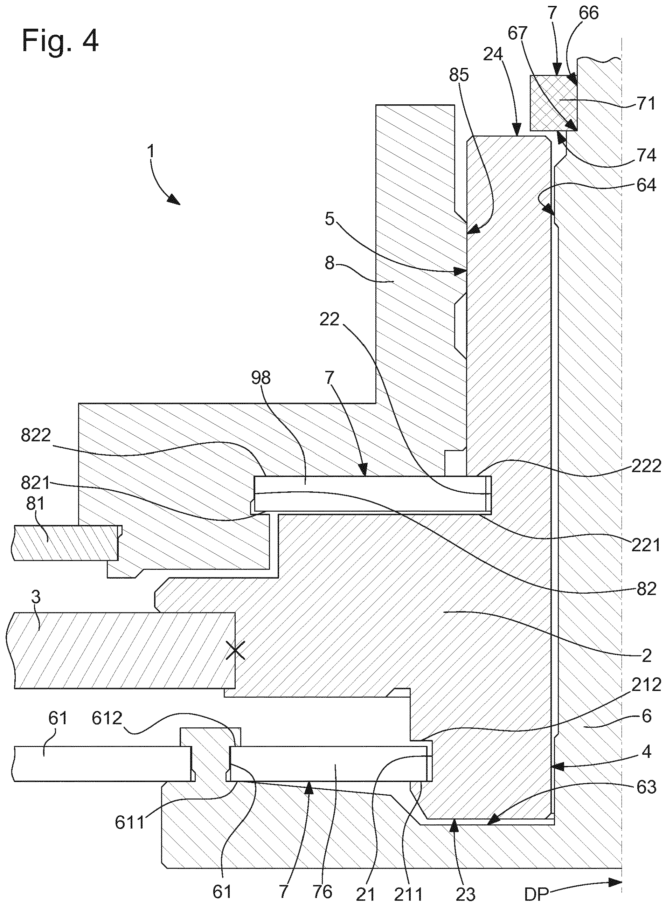

Les figures 3 et 4 illustrent un troisième mode de réalisation où la butée axiale 7 comporte au moins un composant intermédiaire, qui est monté prisonnier entre le tube de centre 2 et le mobile 6, 8, que guide le tube de centre 2. Plus particulièrement, ce composant intermédiaire est un composant élastique, tel que circlips ou similaire.

De façon propre à l'invention, la butée axiale 7 est une butée axiale rapportée comportant un circlips 76, 98, logé à la fois dans une gorge externe 21, 22, que comporte le tube de centre 2 et dans une gorge interne 61, 82, que comporte le mobile 6, 8.

La figure 3 illustre une variante où le mobile d'affichage est un mobile intérieur 6 guidé dans l'alésage principal 4 du tube de centre 2. La butée axiale rapportée est ici un premier circlips 76, logé à la fois dans une première gorge externe 21 que comporte le tube de centre 2, et dans une première gorge interne 61 que comporte le mobile intérieur 6. Le débattement relatif du mobile intérieur 6 par rapport au tube de centre 2 est limité par une coopération en appui de butée entre le premier circlips 76 d'une part, et des premières surfaces latérales de gorges internes 211, 212 de la première gorge externe 21 et des premières surfaces latérales de gorges externes 611, 612 de la première gorge interne 61 d'autre part.

La figure 4 illustre une variante où le mobile d'affichage est un mobile extérieur 8 guidé sur la portée principale 5 du tube de centre 2. La butée axiale rapportée 7 est ici un deuxième circlips 98 logé à la fois dans une deuxième gorge externe 22 que comporte le tube de centre 2, et dans une deuxième gorge interne 82 que comporte le mobile extérieur 8. Le débattement relatif du mobile extérieur 8 par rapport au tube de centre 2 est limité par une coopération en appui de butée entre le deuxième circlips 98 d'une part, et des deuxièmes surfaces latérales de gorges internes 221, 222 de la deuxième gorge externe 22 et des deuxièmes surfaces latérales de gorges externes 821, 822 de la deuxième gorge interne 82 d'autre part.

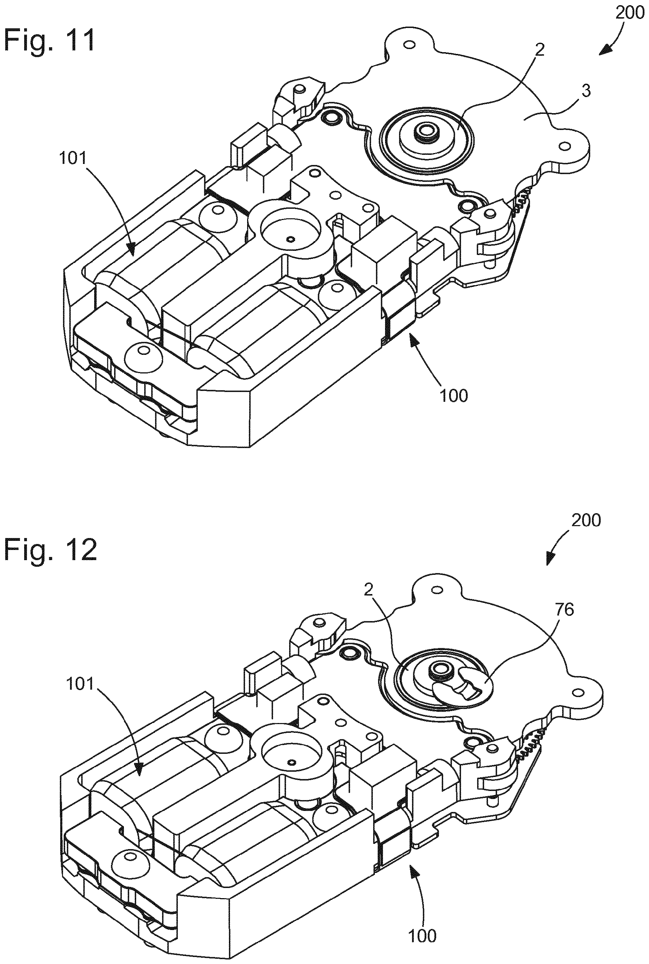

Plus particulièrement, le mobile intérieur 6 est une roue de seconde au centre, dont la tenue axiale en Z est ainsi assurée par un circlips pré-monté sur le tube de centre, la roue seconde étant ensuite clipée sur le circlips par sa gorge intérieure lorsqu'on pousse en butée en Z la roue de seconde contre le tube de centre 2, tel qu'illustré aux figures 11 à 16 exposées plus loin.

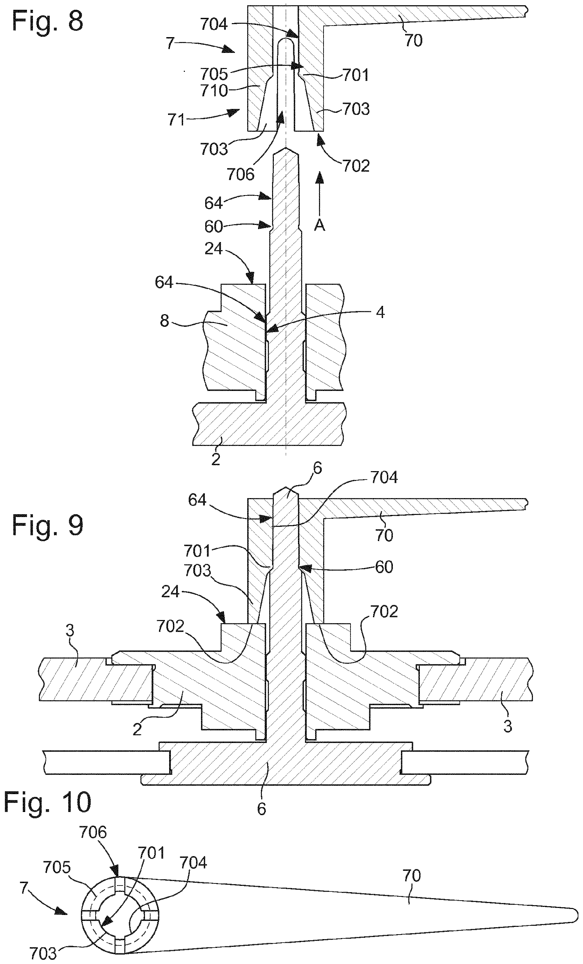

Dans une réalisation particulière du premier mode de réalisation, et en ce qui concerne uniquement le mobile intérieur 6 illustré à la figure 2, et tel que visible aux figures 8 à 10, la première bague 71 est constituée par le canon 710 d'une aiguille 70 emmanchée sur le mobile intérieur 6, en appui par une surface de bout de canon 702 que comporte ce canon 710, sur la première face supérieure 24 du tube de centre 2. Plus particulièrement, ce canon 710 comporte des lèvres élastiques 703 dont l'extrémité constitue la surface de bout de canon 702, et qui sont agencées pour permettre le clipage d'un bourrelet intérieur 701 que comporte ce canon 710 sur une gorge périphérique 60 que comporte l'arbre du mobile intérieur 6, déterminant la cote exacte de maintien en butée axiale.

Dans une autre variante encore, l'aiguille 71 est chassée sur une première portée 66 de l'arbre du mobile intérieur 6, en appui de butée sur un premier épaulement 67 que comporte ce mobile intérieur 6, à une extrémité de la première portée 66. Plus particulièrement ce mobile intérieur 6 est un mobile de seconde au centre. Dans cette variante, c'est le canon 710 de l'aiguille qui fait butée sur la première face supérieure 24 du tube de centre 2. On maîtrise donc la cote de chassage, et donc la position de la butée car l'aiguille est chassée contre un épaulement.

Les figures 17 à 23 illustrent une autre variante, avec le montage de trois rouages concentriques avec la planche qui fait office de circlips, permettant ainsi de supprimer le pont côté fond et le pont côté cadran. Les tubes et axes de centre sont montés avec leur planche rivetés, puis lors de l'insertion verticale les mobiles sont clipés en position. Le tout forme ensuite un ensemble indémontable.

Plus précisément, le mobile intérieur 6, plus particulièrement porteur de l'arbre des secondes, comporte une roue comportant une ouverture de repérage 603, qui délimite aussi un bras 602 porteur d'une languette flexible 601 agencée pour coopérer par clipage avec une gorge inférieure 206 que comporte le tube de centre 2, pour son arrêt axial, tel que visible sur les figures 18, 19 et 20.

Le mobile extérieur 8, plus particulièrement la roue minutes, comporte un agencement similaire, et comporte une roue comportant une ouverture de repérage 803, qui délimite aussi un bras 802 porteur d'une languette flexible 801 agencée pour coopérer par clipage avec une gorge médiane 208 que comporte le tube de centre 2, pour son arrêt axial, tel que visible sur les figures 18, 20 et 21.

Un mobile supérieur 80, plus particulièrement la roue heures, de façon analogue aux figures 2 et 3, comporte un agencement similaire, et comporte une roue comportant une ouverture de repérage 8003, qui délimite aussi un bras 8002 porteur d'une languette flexible 8001 agencée pour coopérer par clipage avec une gorge supérieure 8000 que comporte le mobile extérieur 8, pour son arrêt axial, tel que visible sur les figures 18, 22 et 23.

Les figures 17 à 23 illustrent une autre variante encore, avec le montage de trois rouages concentriques, dans une solution mixte avec à la fois des arrêts axiaux par butée axiale chassée 71 et par circlips. Là aussi, on peut supprimer le pont côté fond et le pont côté cadran.

Plus précisément, dans une autre variante encore, représentée aux figures 24 à 31, l'arbre du mobile intérieur 6, plus particulièrement un arbre des secondes, est arrêté sur l'extrémité du tube de centre 2 par une butée axiale chassée 71, tel que visible sur les figures 24 à 26.

Le mobile extérieur 8, plus particulièrement porteur de la chaussée des minutes, comporte deux fentes 880 permettant de bloquer ce mobile axialement avec un circlips 980, au-dessus duquel le mobile extérieur 8 comporte une gorge d'arrêt 883.

Le mobile supérieur 80, plus particulièrement porteur de la chaussée des heures, de façon analogue aux figures 2 et 3, comporte une roue comportant une ouverture de repérage, et comporte un grand circlips 881 déjà pré-montée sur la roue, d'un diamètre maximal légèrement inférieur à celui de cette roue, et arrêté par un épaulement de la chaussée 882, et, lors de l'insertion axiale, la roue se clipe en position dans la gorge d'arrêt 883.

Le circlips 881 comporte aussi une découpe, qui permet aussi de relever le niveau de l'ouverture capacitive (0,15mm) sur la planche plus proche. Cette dernière permet aussi de gagner de la contre-masse sur le mobile heure et ainsi de monter une aiguille heure à balourd maximisé.

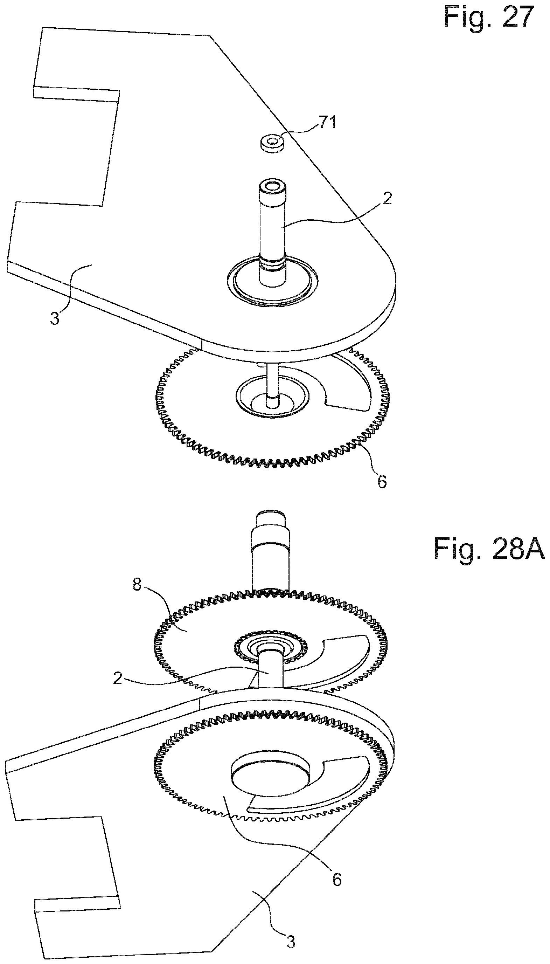

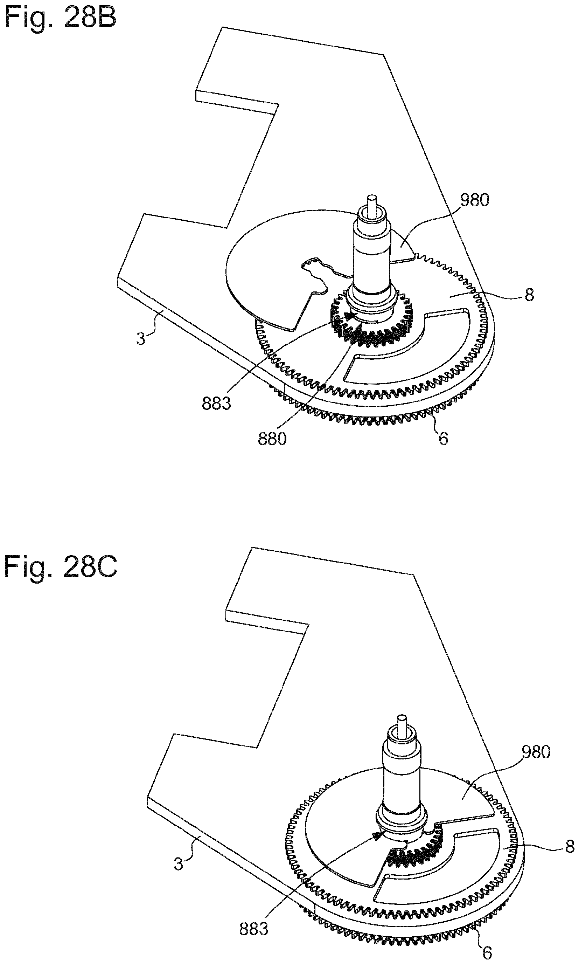

On peut également étendre cette amélioration à la roue minutes pour le balourd d'aiguille. Les figures 28B et 28C illustrent une variante avec, là aussi une clavette 980 de grand diamètre, très proche de celui de la roue, dont l'orientation angulaire de la découpe correspond, quand elle est montée, à la découpe de la roue.

Plus particulièrement, le groupe de motorisation 200, et le module 100 qu'il comporte, comporte les caractéristiques décrites dans la demande EP15201458.5 du même déposant, relative à un module moteur pour montre.

Le groupe de motorisation 200 selon l'invention comporte une pluralité de modules, dont au moins un module moteur 100, et, dans une réalisation particulière, une pluralité de modules moteurs 100, chacun comportant une platine 3 agencée pour la fixation du module concerné à un mouvement d'horlogerie 500. Au moins un de ces modules moteurs 100, et de préférence chacun de ces modules moteurs 100, comporte des moyens moteurs 101 agencés pour entraîner au moins un mobile d'affichage 6, 8. Dans une variante, le groupe de motorisation 200 ne comporte pas que des modules moteurs, mais aussi au moins un module de renvoi dépourvu de moyens moteurs et comportant uniquement un rouage de renvoi. Selon l'invention, comme exposé plus haut, au moins l'un des modules moteurs 100 constituant le groupe de motorisation 200 comporte un mécanisme d'affichage 1, dont la platine 3 est agencée pour la fixation du module 100 à un mouvement d'horlogerie 500. On comprend qu'un tel groupe de motorisation 200 est auto-portant, et ne nécessite pas de fixation à une autre platine, il peut constituer, complété par des moyens de stockage d'énergie et des moyens de commande et de pilotage, un tel mouvement 500. Ce groupe de motorisation 200 peut aussi être fixé directement dans une boîte d'une montre 1000.

Dans une variante, le groupe de motorisation 200 comporte une pluralité de modules 100, chacun agencé pour entraîner au moins un tel mobile d'affichage 6, 8.

Ainsi, plus particulièrement, le module 100 est un module pour montre, comportant des moyens d'alimentation et de commande.

Plus particulièrement, le module 100 est un module moteur sans pont d'axe seconde centre.

Plus particulièrement, le groupe de motorisation 200 est un groupe de motorisation pour montre, comportant des moyens d'alimentation et de commande.

Les figures 11 à 16 illustrent un tel groupe de motorisation 200 comportant trois modules moteurs 100 assemblés en forme de Y (étoile triangulaire à 120°), comportant chacun des moyens moteurs 101 agencés pour entraîner au moins un mobile d'affichage, dont l'un de ces modules 100 comporte un mécanisme d'affichage 1 selon l'invention, selon une séquence de montage où ce groupe 200, constitué par les trois modules, pré-assemblés au niveau de leurs platines 3, reçoit un tube de centre 2 en figure 11, un circlips 76 présenté au niveau d'une gorge extérieure 21 de ce tube de centre 2 en figure 12 et clipé en figure 13, l'insertion d'un mobile intérieur 6 dans le tube de centre 2 en figures 14 et 15, où est visible sa gorge intérieure 61 pour la réception du circlips 76, et le clipage du mobile intérieur 6 sur le circlips 76 en figure 16.

Ainsi, dans le cas d'un moteur de seconde au centre seul, il n'est plus nécessaire d'avoir un pont.

L'invention concerne encore un mouvement d'horlogerie 500 comportant au moins un tel groupe de motorisation 200.

L'invention concerne encore une montre 1000 comportant au moins un tel mouvement 500 ou au moins un tel groupe de motorisation 200.

L'invention apporte des avantages importants :
- suppression d'un pont garni pour assurer le pivotement d'une seule roue ;
- pivotement assuré par une seule pièce, suppression du risque de coincement de l'arbre en cas de mauvais alignement d'une pierre avec le tube de centre ;
- réduction de l'ébat sur la roue seconde, la chaîne de tolérance est faite par deux dimensions, la de hauteur de sécurité en Z est ainsi réduite.

L'invention se prête particulièrement bien à la fabrication de montres électromécaniques ou de montres électroniques, en particulier communicantes.

## Revendications

1. Groupe de motorisation (200) comportant une pluralité de modules moteurs (100), chacun comportant une platine (3) agencée pour la fixation dudit module (100) à un mouvement d'horlogerie (500), **caractérisé en ce que** chacun desdits modules moteurs (100) comporte des moyens moteurs (101) agencés pour entraîner au moins un mobile d'affichage (6, 8), dont l'un au moins desdits modules moteurs (100) comporte un mécanisme d'affichage (1) qui comporte un tube de centre (2) fixé sur ladite platine (3), ledit tube de centre (2) comportant au moins un alésage principal (4) ou une portée principale (5) de guidage pour la réception et le guidage en rotation, autour d'un axe principal (DP), d'un dit mobile d'affichage (6, 8) intérieur ou extérieur audit tube de centre (2), ledit mécanisme d'affichage (1) comportant au moins une butée axiale (7) agencée pour limiter à une valeur prédéterminée le jeu axial selon la direction dudit axe principal (DP) entre ledit tube de centre (2) et ledit mobile d'affichage (6, 8), et **caractérisé en ce que** ladite au moins une butée axiale (7) est une butée axiale rapportée (71, 79, 76, 98) qui est, ou bien montée prisonnière entre ledit tube de centre (2) et ledit mobile d'affichage (6, 8), ou bien fixée audit mobile d'affichage (6, 8), et comporte un circlips (76, 98) logé à la fois dans une gorge externe (21, 22) que comporte ledit tube de centre (2) et dans une gorge interne (61, 82) que comporte ledit mobile (6, 8).

2. Groupe de motorisation (200) selon la revendication 1, **caractérisé en ce que** ledit mobile d'affichage (6, 8) est un mobile intérieur (6) guidé dans ledit alésage principal (4) dudit tube de centre (2), et **en ce que** ladite butée axiale rapportée est un premier circlips (76) logé à la fois dans une première gorge externe (21) que comporte ledit tube de centre (2) et dans une première gorge interne (61) que comporte ledit mobile intérieur (6), et **en ce que** le débattement relatif dudit mobile intérieur (6) par rapport audit tube de centre (2) est limité par une coopération en appui de butée entre ledit premier circlips (76) d'une part, et des premières surfaces latérales de gorges internes (211, 212) de ladite première gorge externe (21) et des premières surfaces latérales de gorges externes (611, 612) de ladite première gorge interne (61) d'autre part.

3. Groupe de motorisation (200) selon la revendication 1, **caractérisé en ce que** ledit mobile d'affichage (6, 8) est un mobile extérieur (8) guidé sur ladite portée principale (5) dudit tube de centre (2), et **en ce que** ladite butée axiale rapportée (7) est un deuxième circlips (98) logé à la fois dans une deuxième gorge externe (22) que comporte ledit tube de centre (2) et dans une deuxième gorge interne (82) que comporte ledit mobile extérieur (8), et **en ce que** le débattement relatif dudit mobile extérieur (8) par rapport audit tube de centre (2) est limité par une coopération en appui de butée entre ledit deuxième circlips (98) d'une part, et des deuxièmes surfaces latérales de gorges internes (221, 222) de ladite deuxième gorge externe (22) et des deuxièmes surfaces latérales de gorges externes (821, 822) de ladite deuxième gorge interne (82) d'autre part.

4. Groupe de motorisation (200) selon la revendication 1, **caractérisé en ce que** ledit tube de centre (2) comporte au moins un alésage principal (4) de guidage pour la réception et le guidage en rotation, autour d'un axe principal (DP), d'un dit mobile d'affichage (6, 8) intérieur audit tube de centre (2), ledit mécanisme d'affichage (1) comportant au moins une butée axiale (7) agencée pour limiter à une valeur prédéterminée le jeu axial selon la direction dudit axe principal (DP) entre ledit tube de centre (2) et ledit mobile d'affichage (6, 8), et **en ce que** ladite au moins une butée axiale est une butée axiale rapportée (71, 79, 76, 98) qui est montée prisonnière entre ledit tube de centre (2) et ledit mobile d'affichage (6, 8).

5. Groupe de motorisation (200) selon la revendication 1 **caractérisé en ce que** ladite butée axiale (7) est une butée axiale rapportée comportant un circlips (76, 98) logé à la fois dans une gorge externe (21, 22) que comporte ledit tube de centre (2) et dans une gorge interne (61, 82) que comporte ledit mobile (6, 8).

6. Groupe de motorisation (200) selon la revendication 1 **caractérisé en ce que** ledit mobile d'affichage (6, 8) est un mobile intérieur (6) guidé dans ledit alésage principal (4) dudit tube de centre (2), et **en ce que** ladite butée axiale rapportée est un premier circlips (76) logé à la fois dans une première gorge externe (21) que comporte ledit tube de centre (2) et dans une première gorge interne (61) que comporte ledit mobile intérieur (6), et **en ce que** le débattement relatif dudit mobile intérieur (6) par rapport audit tube de centre (2) est limité par une coopération en appui de butée entre ledit premier circlips (76) d'une part, et des premières surfaces latérales de gorges internes (211, 212) de ladite première gorge externe (21) et des premières surfaces latérales de gorges externes (611, 612) de ladite première gorge interne (61) d'autre part.

7. Mouvement (500) d'horlogerie comportant au moins un groupe de motorisation (200) selon l'une des revendications 1 à 6.

8. Montre (1000) comportant au moins un mouvement (500) selon la revendication 7 ou au moins un groupe de motorisation (200) selon l'une des revendications 1 à 6.

## Patentansprüche

1. Antriebseinheit (200) mit mehreren Antriebsmodulen (100), von denen jedes eine Platte (3) umfasst, die zum Befestigen des Moduls (100) an einem Uhrwerk (500) angeordnet ist, **dadurch gekennzeichnet, dass** jedes der Antriebsmodule (100) Antriebsmittel (101) umfasst, die zum Antreiben mindestens eines Anzeigedrehteils (6, 8) angeordnet sind, wovon mindestens eines der Module (100) einen Anzeigemechanismus (1) umfasst, der ein an einer Platte (3) befestigtes Mittelrohr (2) umfasst, wobei das Mittelrohr (2) mindestens eine Hauptbohrung (4) oder eine Hauptführungsweite (5) für die Aufnahme und die rotatorische Führung des Anzeigedrehteils (6, 8) innerhalb oder außerhalb des Mittelrohrs (2) um eine Hauptachse (DP) aufweist, wobei der Anzeigemechanismus (1) mindestens einen axialen Anschlag (7) umfasst, der angeordnet ist, um das axiale Spiel in Richtung der Hauptachse (DP) zwischen dem Mittelrohr (2) und dem Anzeigedrehteil (6, 8) auf einen vorgegebenen Wert zu begrenzen, und **dadurch gekennzeichnet, dass** der mindestens eine axiale Anschlag (7) ein angefügter axialer Anschlag (71, 79, 76, 98) ist, der entweder eingeschlossen zwischen dem Mittelrohr (2) und dem Anzeigedrehteil (6, 8) montiert ist, oder an dem Anzeigedrehteil (6, 8) befestigt ist, und einen Sicherungsring (76, 98) umfasst, der sowohl in einer ersten äußeren Ausnehmung (21, 22), die das Mittelrohr (2) aufweist, als auch in einer ersten inneren Ausnehmung (61, 82), die das Drehteil (6) aufweist, aufgenommen ist,

2. Antriebseinheit (200) nach Anspruch 1, **dadurch gekennzeichnet, dass** das Anzeigedrehteil (6, 8) ein inneres Drehteil (6) ist, das in der Hauptbohrung (4) des Mittelrohrs (2) geführt wird, und dass der angefügte axiale Anschlag ein erster Sicherungsring (76) ist, der sowohl einer ersten äußeren Ausnehmung (21), die das Mittelrohr (2) aufweist, als auch in einer ersten inneren Ausnehmung (61), die das innere Drehteil (6) aufweist, aufgenommen ist, und dass der relative Ausschlag des inneren Drehteils (6) in Bezug auf das Mittelrohr (2) durch eine anschlagend abstützende Zusammenwirkung zwischen dem ersten Sicherungsring (76) einerseits und ersten inneren Ausnehmungsseitenflächen (211, 212) der ersten äußeren Ausnehmung (21) und ersten äußeren Ausnehmungsseitenflächen (611, 612) der ersten inneren Ausnehmung (61) andererseits begrenzt ist.

3. Antriebseinheit (200) nach Anspruch 1, **dadurch gekennzeichnet, dass** das Anzeigedrehteil (6, 8) ein äußeres Drehteil (8) ist, das auf der Hauptweite (5) des Mittelrohrs (2) geführt wird, und dass der angefügte axiale Anschlag (7) ein zweiter Sicherungsring (98) ist, der sowohl einer zweiten äußeren Ausnehmung (22), die das Mittelrohr (2) aufweist, als auch in einer zweiten inneren Ausnehmung (82), die das äußere Drehteil (8) aufweist, aufgenommen ist, und dass der relative Ausschlag des äußeren Drehteils (8) in Bezug auf das Mittelrohr (2) durch eine anschlagend abstützende Zusammenwirkung zwischen dem zweiten Sicherungsring (98) einerseits und zweiten inneren Ausnehmungsseitenflächen (221, 222) der zweiten äußeren Ausnehmung (22) und zweiten äußeren Ausnehmungsseitenflächen (821, 822) der zweiten inneren Ausnehmung (82) andererseits begrenzt ist.

4. Antriebseinheit (200) nach Anspruch 1, **dadurch gekennzeichnet, dass** das Mittelrohr (2) mindestens eine Hauptführungsbohrung (4) für die Aufnahme und die rotatorische Führung des Anzeigedrehteils (6, 8) innerhalb des Mittelrohrs (2) um eine Hauptachse (DP) aufweist, wobei der Anzeigemechanismus (1) mindestens einen axialen Anschlag (7) umfasst, der angeordnet ist, um das axiale Spiel in Richtung der Hauptachse (DP) zwischen dem Mittelrohr (2) und dem Anzeigedrehteil (6, 8) auf einen vorgegebenen Wert zu begrenzen, und dass der mindestens eine axiale Anschlag ein angefügter axialer Anschlag (71, 79, 76, 98) ist, der eingeschlossen zwischen dem Mittelrohr (2) und dem Anzeigedrehteil (6, 8) montiert ist.

5. Antriebseinheit (200) nach Anspruch 1, **dadurch gekennzeichnet, dass** der axiale Anschlag (7) ein angefügter axialer Anschlag mit einem Sicherungsring (76, 98) ist, der sowohl in einer äußeren Ausnehmung (21, 22), die das Mittelrohr (2) aufweist, als auch in einer inneren Ausnehmung (61, 82), die das Drehteil (6, 8) aufweist, aufgenommen ist.

6. Antriebseinheit (200) nach Anspruch 1, **dadurch gekennzeichnet, dass** das Anzeigedrehteil (6, 8) ein inneres Drehteil (6) ist, das in der Hauptbohrung (4) des Mittelrohrs (2) geführt wird, und dass der angefügte axiale Anschlag ein erster Sicherungsring (76) ist, der sowohl einer ersten äußeren Ausnehmung (21), die das Mittelrohr (2) aufweist, als auch in einer ersten inneren Ausnehmung (61), die das innere Drehteil (6) aufweist, aufgenommen ist, und dass der relative Ausschlag des inneren Drehteils (6) in Bezug auf das Mittelrohr (2) durch eine anschlagend abstützende Zusammenwirkung zwischen dem ersten Sicherungsring (76) einerseits und ersten inneren Ausnehmungsseitenflächen (211, 212) der ersten äußeren Ausnehmung (21) und ersten äußeren Ausnehmungsseitenflächen (611, 612) der ersten inneren Ausnehmung (61) andererseits begrenzt ist.

7. Uhrwerk (500), umfassend mindestens eine Antriebseinheit (200) nach einem der Ansprüche 1 bis 6.

8. Uhr (1000), umfassend mindestens ein Uhrwerk (500) nach Anspruch 7 oder mindestens eine Antriebseinheit (200) nach einem der Ansprüche 1 bis 6.

## Claims

1. Motor group (200) comprising a plurality of motor modules (100), each comprising a plate (3) arranged for securing said module (100) to a timepiece movement (500), **characterized in that** each of said motor modules (100) comprises motor means (101) arranged for driving at least one display wheel set (6, 8), at least one of said motor modules (100) whereof comprises a display mechanism (1) which includes a centre pipe (2) fixed on said plate (3), said centre pipe (2) comprising at least one main bore (4) or a main guide bearing surface (5) for receiving and guiding in rotation, about a main axis (DP), a said display wheel set (6, 8) internal or external to said centre pipe (2), said display mechanism (1) including at least one axial stop (7) arranged to limit to a predetermined value the axial play in the direction of said main axis (DP) between said centre pipe (2) and said display wheel set (6, 8), and **characterized in that** said at least one axial stop (7) is an added axial stop (71, 79, 76, 98), which is either captively mounted between said centre pipe (2) and said display wheel set (6, 8), or secured to said display wheel set (6, 8), and comprises a retaining ring (76, 98) housed both inside an outer groove (21, 22) comprised in said centre pipe (2) and inside an inner groove (61, 82) comprised in said wheel set (6, 8).

2. Motor group (200) according to claim 1, **characterized in that** said display wheel set (6, 8) is an inner wheel set (6) guided inside said main bore (4) of said centre pipe (2), and **in that** said added axial stop is a first retaining ring (76) housed both inside a first outer groove (21) comprised in said centre pipe (2) and inside a first inner groove (61) comprised in said inner wheel set (6), and **in that** the relative displacement of said inner wheel set (6) with respect to said centre pipe (2) is limited by an abutting engagement between said first retaining ring (76), on the one hand, and first lateral surfaces of inner grooves (211, 212) of said first outer groove (21) and first lateral surfaces of outer grooves (611, 612) of said first inner groove (61) on the other hand.

3. Motor group (200) according to claim 1, **characterized in that** said display wheel set (6, 8) is an outer wheel set (8) guided on said main bearing surface (5) of said centre pipe (2), and **in that** said added axial stop (7) is a second retaining ring (98) housed both inside a second outer groove (22) comprised in said centre pipe (2) and inside a second inner groove (82) comprised in said outer wheel set (8), and **in that** the relative displacement of said outer wheel set (8) with respect to said centre pipe (2) is limited by an abutting engagement between said second retaining ring (98), on the one hand, and second lateral surfaces of inner grooves (221, 222) of said second outer groove (22) and second lateral surfaces of outer grooves (821, 822) of said second inner groove (82) on the other hand.

4. Motor group (200) according to claim 1, **characterized in that** said centre pipe (2) comprises at least one main guide bore (4) for receiving and guiding in rotation, about a main axis (DP), a said display wheel set (6, 8) internal to said centre pipe (2), said display mechanism (1) including at least one axial stop (7) arranged to limit to a predetermined value the axial play in the direction of said main axis (DP) between said centre pipe (2) and said display wheel set (6, 8), and **in that** said at least one axial stop is an added axial stop (71, 79, 76, 98), which is captively mounted between said centre pipe (2) and said display wheel set (6, 8).

5. Motor group (200) according to claim 1, **characterized in that** said axial stop (7) is an added axial stop comprising a retaining ring (76, 98) housed both inside an outer groove (21, 22) comprised in said centre pipe (2) and inside an inner groove (61, 82) comprised in said wheel set (6, 8).

6. Motor group (200) according to claim 1, **characterized in that** said display wheel set (6, 8) is an inner wheel set (6) guided inside said main bore (4) of said centre pipe (2), and **in that** said added axial stop is a first retaining ring (76) housed both inside a first outer groove (21) comprised in said centre pipe (2) and inside a first inner groove (61) comprised in said inner wheel set (6), and **in that** the relative displacement of said inner wheel set (6) with respect to said centre pipe (2) is limited by an abutting engagement between said first retaining ring (76), on the one hand, and first lateral surfaces of inner grooves (211, 212) of said first outer groove (21) and first lateral surfaces of outer grooves (611, 612) of said first inner groove (61) on the other hand.

7. Timepiece movement (500) including at least one motor group (200) according to one of claims 1 to 6.

8. Watch (1000) including at least one movement (500) according to claim 7 or at least one motor group (200) according to one of claims 1 to 6.
